Europäisches Patentamt

European Patent Office

Office européen des brevets

(19)

(11) Veröffentlichungsnummer : **0 184 010 B1**

(12) **EUROPÄISCHE PATENTSCHRIFT**

(45) Veröffentlichungstag der Patentschrift :
10.02.88

(51) Int. Cl.⁴ : **G 03 B 9/02**

(21) Anmeldenummer : **85114103.6**

(22) Anmeldetag : **06.11.85**

(54) Verlustarmer Direktantrieb für kryogene Temperaturen.

(30) Priorität : **15.11.84 DE 3441737**

(43) Veröffentlichungstag der Anmeldung :
**11.06.86 Patentblatt 86/24**

(45) Bekanntmachung des Hinweises auf die Patenterteilung : **10.02.88 Patentblatt 88/06**

(84) Benannte Vertragsstaaten :
**BE CH FR GB IT LI NL**

(56) Entgegenhaltungen :
**CH-A- 402 591
DE-A- 1 935 158
NL-C- 59 538**

(73) Patentinhaber : **Max-Planck-Gesellschaft zur Förderung der Wissenschaften e.V.
Bunsenstrasse 10
D-3400 Göttingen (DE)**

(72) Erfinder : **Bauer, Horst
Vordergasse 7
D-6945 Hirschberg (DE)**
Erfinder : **Martin, Wilhelm, Dr.
Claszeile 81
D-1000 Berlin 37 (DE)**
Erfinder : **Bellemann, Heinrich
Grünwaldstrasse 7
D-6901 Wiesenbach (DE)**

(74) Vertreter : **Landsmann, Ralf, Dipl.-Ing.
Kleeweg 3
D-7990 Friedrichshafen 1 (DE)**

EP 0 184 010 B1

**Beschreibung**

Die Erfindung betrifft einen bei Null-g-Bedingungen und im Kryovakuum verwendbaren Direktantrieb mit geringem Platzbedarf und hoher Positionierungsgenauigkeit für Blendenräder oder dergleichen in Raumfluggeräten.

Aus der CH-A-402 591 ist bekannt, Blendenräder mittels Schrittmotoren zu positionieren, wobei für die Positionierung ein Zusatzmechanismus erforderlich ist.

Ebenfalls ist aus der NL-A-59 538 ein Direktantrieb für Filterräder bekannt, der eine Sperrklinke aufweist, die an ihren beiden Enden Eingriffselemente besitzt, welche in Stifte auf dem Filterrad eingreifen. Angetrieben wird das Filterrad von einer Spiralfeder, wodurch die Benutzungsdauer bis zu einem erneuten Aufziehen der Feder begrenzt ist. Ein nachträgliches Aufziehen ist jedoch bei der Verwendung in Raumfluggeräten unmöglich oder mit hohem Aufwand verbunden.

Aufgabe der Erfindung ist es, Filter, Blendenräder, Spiegel oder andere zu bewegende Teile in Raumfluggeräten zu bewegen und genau zu positionieren, wobei die Funktionsfähigkeit im Temperaturbereich von 1,6 K bis 300 K sichergestellt sein muss und die Druckbedingungen von $10^{-5}$ Torr bis 760 Torr reichen. Weiter steht nur beschränkter Platz zur Verfügung, so dass der Antrieb kompakt sein muss. Die Positionierungsgenauigkeit muss bei Filtern und Blendenrädern auf 1,7 arc min. eingehalten werden ; die im Inneren freigesetzte Wärme muss minimal sein. Die Anzahl der Zuleitungen und ihre Querschnitte müssen aus Gründen der Wärmeleitung klein sein, da leistungsstarke Stromzuführungen immer auch grosse Wärmebrücken sind, muss auch der Antriebsstrom gering gehalten werden.

Diese Antriebs- und Positionierungsaufgaben werden erfindungsgemäss gelöst, durch eine schwenkbar gelagerte Klinke mit zwei Armen, die zur Weiterschaltung bzw. Positionierung eines Zahnrades an ihren Enden Eingriffselemente für den Eingriff in Zahnflanken bzw. Zahngründe des Zahnrades aufweisen und durch einen Magneten, der bei Erregung die in einer Ausgangsposition ruhende Klinke in einer Richtung bewegt und dabei das Zahnrad weiterschaltet, und durch eine mit der Klinke und einem Gehäuse verbundene Spiralfeder, die beim Abschalten des Magneten die Klinke in die Ausgangsposition zurückholt.

Weitere Ausgestaltungen der Erfindung werden nachfolgend anhand von Figuren erläutert.

Es zeigen :

Fig. 1 die prinzipielle Darstellung eines Klinkenantriebs,

Fig. 2 eine Teilschnittansicht entlang der Linie A-A von Fig. 1 und Fig. 3 eine axonometrische Darstellung des Klinkenantriebs,

Fig. 4 und 5 eine magnetisch wirkende Bremse für das Klinkenrad.

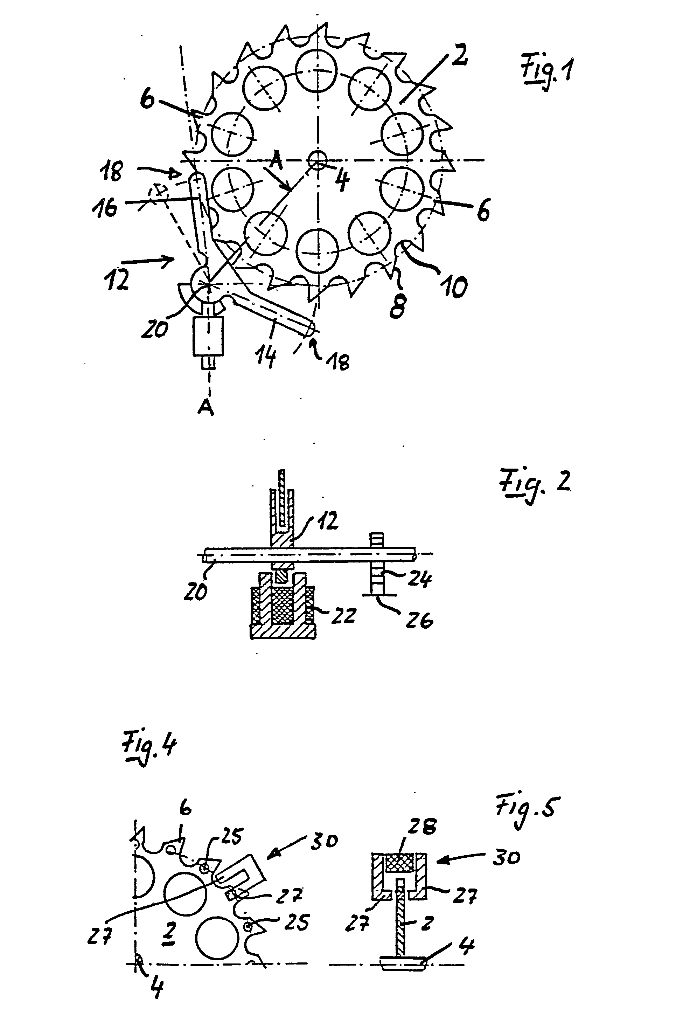

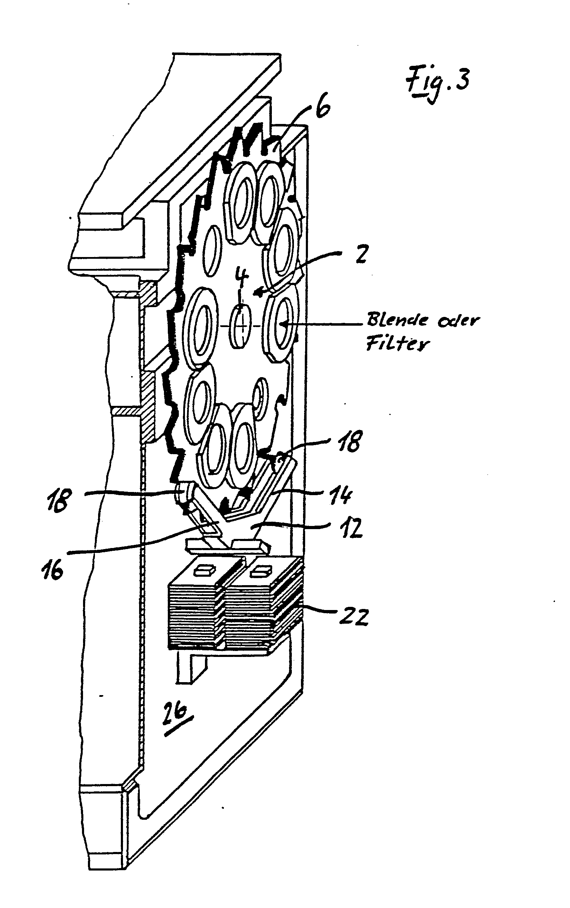

Fig. 1 zeigt die Draufsicht auf ein Zahnrad 2, das auf einer Achse 4 drehbar gelagert ist. An seinem Umfang weist das Zahnrad im Ausführungsbeispiel 20 Zähne 6 auf, die jeweils aus einer Zahnflanke 8 und einem Zahngrund 10 bestehen. Die in Fig. 1 gezeigte Klinke 12 hat zwei Arme 14, 16, die an ihren Enden Eingriffselemente 18 tragen. Die Eingriffselemente sind deutlich in Fig. 3 dargestellt. Die Klinke ist auf einer Achse 20 gelagert, die deutlich in Fig. 2 zu erkennen ist. In dieser Figur ist auch ein wicklungserregter Antriebsmagnet 22 dargestellt und eine Rückholfeder 24 zu sehen, die sich einerseits an der Achse 20 und andererseits am Gehäuse 26 abstützt.

Die Wirkungsweise des Klinkenantriebs ist wie folgt :

Ein Arm der Klinke wird vom Elektro-Magneten 22 auf eine der schrägen Zahnflanken 8 auf den Radumfang gedrückt und bewegt, so dass das Rad um einen halben Schritt weiterrückt. Die Endlage dieses ersten Teils der Bewegung ist dann erreicht, wenn sich das Eingriffselement am Zahngrund 10 befindet. Nach dem Abschalten des Elektro-Magneten 22 zieht die Feder 24 aus Berylliumbronze die Klinke 12 zurück. Dabei wird der zweite Arm 16 der Klinke auf die in Drehrichtung des Rades um einige Positionen versetzte schräge Zahnflanke 8 gedrückt und eine weitere Drehbewegung des Rades ausgeführt. Mit Erreichen des Zahngrundes 10 wird der Bewegungsschritt zu Ende gebracht. Die Zahl der Zähne auf dem Zahnrad ist im Ausführungsbeispiel so gewählt, dass mit zwei Schritten (Strompulsen) eine Filter- bzw. Blendenposition weitergeschaltet wird.

Der Klinkenantrieb ist optimierbar durch eine feinere Unterteilung der Schritte oder durch eine Erhöhung der Schrittzahl zum Erreichen der nächsten Position des Filter- oder Blendenelements. Kleine Schwenkbewegungen der Klinke, kleine Dauer-Magnete und enge Spalte sowie kürzere und schwächere Strompulse führen zu einer Verminderung der erforderlichen Leistung. Durch kleinere Schwenkbewegungen der Klinke wird die induzierte Energie der Klinke geringer. Die aus Elektro-Magnet und Klinke bestehende Antriebseinheit kann zur Gewichtsersparnis sehr klein gebaut werden. Die Achse 20 kann auch mittels Kreuzfedergelenken (nicht gezeigt) gelagert werden. Werden die Kreuzfedergelenke unter Vorspannung eingebaut, so kann die Feder 24 entfallen.

Zahnrad 2 und Klinke 12 werden vorzugsweise aus einer Aluminiumlegierung gefertigt. Die Achsen 4 und 20 sind in Tieftemperatur geeigneten Kugellagern geführt. Die Magentanordnung 22 besteht aus einem U-förmigen Magnetkörper und einem keilförmigen Anker. Die Form des Ankers gestattet kleine Luftspalte bei grossem Verstellweg der Sperrklinke. Die Erregerwicklung liegt auf zwei identischen Spulekernen, die in Fig. 3 deutlich dargestellt sind.

Fig. 4 und 5 zeigen eine Einrichtung zur Übertragung eines Haltemoments nach erfolgtem Viertelschritt der Positionsverstellung. Durch die verlustarme leichtgängige Bauart sind Resteinflussgrössen (Remanenzen zwischen den Lagerungen, Unwuchten) vorhanden. Um die Filter oder Blenden in Sollposition zu halten, befinden sich im Zahnrad 2 an den Zähnen Eisenteile 25, denen Scheiben 27 aus weichmagnetischem Werkstoff gegenüberliegen. Zwischen den Scheiben 27 ist ein Dauermagnet 28 eingebettet, so dass die Scheiben 27 und der Dauer-Magnet 28 einen Bügel 30 bilden. Die Scheiben 27 sind gegenüber dem Zahnrad 2 um je einen halben Schritt versetzt angeordnet.

Ist das Zahnrad 2 in Ruhelage, dann befindet sich eine Seite des Bügels 30 über einem Eisenteil 25, das in einen Zahn 6 eingesetzt ist. Der magnetische Kreis ist durch den Zahn über die eine Seite der Festhalteeinrichtung geschlossen. Wird das Rad um einen halben Schritt vorwärts bewegt, so wird der magnetische Kreis am nächsten Zahn über die andere Seite der Festhalteeinrichtung geschlossen.

## Patentansprüche

1. Bei Null-g-Bedingungen und im Kryovakuum verwendbarer Direktantrieb mit geringem Platzbedarf und hoher Positioniergenauigkeit für Filterräder, Blendenräder oder dergleichen in Raumfluggeräten, gekennzeichnet durch eine schwenkbar gelagerte Klinke (12) mit zwei Armen (14, 16), die zur Weiterschaltung bzw. Positionierung eines Zahnrades (2) an ihren Enden Eingriffselemente (18) für den Eingriff in Zahnflanken (8) bzw. Zahngründe (10) des Zahnrades (2) aufweisen und durch einen Elektro-Magneten (22), der bei Erregung die in einer Ausgangsposition ruhende Klinke (12) in einer Richtung bewegt und dabei das Zahnrad (2) weiterschaltet, und durch eine mit der Klinke (12) und einem Gehäuse (26) verbundene Spiralfeder (24), die beim Abschalten des Elektro-Magneten (22) die Klinke (12) in die Ausgangsposition zurückholt.

2. Direktantrieb nach Anspruch 1, dadurch gekennzeichnet, dass Filter oder Blenden im Zahnrad (2) angeordnet sind.

3. Direktantrieb nach Ansprüchen 1 und 2, dadurch gekennzeichnet, dass sich im Zahnrad (2) an den Zähnen (6) Eisenteile (25) befinden, die mit Scheiben (27), welche mit einem Dauermagneten (28) in Verbindung stehen, eine Festhalteeinrichtung bilden, die bei jedem halben Schritt wirksam wird.

## Claims

1. Direct drive occupying a small amount of space and with a high degree of positioning accuracy for filter wheels, aperture wheels or similar items in space flight equipment operating under zero g conditions and in a cryovacuum, characterised by a rotatably mounted pawl (12) with two arms (14, 16) provided at their ends with engaging parts (18) for engaging in tooth flanks (8) or tooth roots (10) of a ratchet wheel (2) for the step-by-step movement or positioning of the ratchet wheel (2) and by an electromagnet (22), which when energized moves a pawl (12) resting in an initial position in one direction whilst moving forward the ratchet wheel (2) in a step-by-step movement, as well as by a helical spring (24) connected to the pawl (12) and a casing (26) which brings back the pawl (12) into the initial position when the electromagnet is deenergized (22).

2. Direct drive according to claim 1, characterised in that filters or apertures are arranged in the ratchet wheel (2).

3. Direct drive according to claims 1 and 2, characterised in that iron parts (25) are located at the teeth (6) in the ratchet wheel (2) which with plates (27) which are connected to a permanent magnet (28), form a locking device which is operated with each half step.

## Revendications

1. Commande directe de faible encombrement et de haute précision de positionnement pour des roues de filtres, des roues de diaphragmes ou des organes analogues dans des engins spatiaux, utilisable dans des conditions de zéro g et dans le cryovide, caractérisée en ce qu'elle comporte un cliquet pivotant (12) à deux bras (14, 16) dont les extrémités portent, pour l'avancement et respectivement le positionnement d'une roue dentée (2), des organes d'engrènement (18) destinés à venir en prise avec des flancs (8) voire des pieds (10) des dents de la roue dentée (2), et un électro-aimant (22) qui, lors de son excitation, déplace le cliquet (12) à partir d'une position de repos dans l'une des directions en faisant avancer la roue dentée (2) et qui, lors de la désexcitation de l'électro-aimant (22), ramène le cliquet (12) dans sa position de départ par l'intermédiaire d'un ressort spiral (24) rattaché au cliquet (12) et à un boîtier (26).

2. Commande directe selon la revendication 1, caractérisée en ce que des filtres ou diaphragmes sont disposés dans la roue dentée (2).

3. Commande directe selon l'une des revendications 1 ou 2, caractérisée en ce que la roue dentée (2) comprend, sur les dents (6), des éléments de fer (25) qui constituent, conjointement avec des flans (27) en combinaison avec un aimant permanent (28), un dispositif de maintien qui entre en action à chaque demi-pas.

Fig.1

Fig. 2

Fig.4

Fig.5

Fig. 3

Blende oder Filter